# EUROPÄISCHE PATENTSCHRIFT

(11) **EP 1 988 141 B1**
(45) Veröffentlichungstag und Bekanntmachung des Hinweises auf die Patenterteilung: **05.01.2011**
(21) Anmeldenummer: 08154790.3
(22) Anmeldetag: 18.04.2008
(51) Int. Cl.: C09J 7/02, C09J 153/02

(54) **Verwendung von Haftklebemassen in wieder ablösbaren Haftklebestreifen**
Use of adhesive substances in removable adhesive strips
Utilisation de substances adhésives pour des bandes adhésives amovibles

(30) Priorität: 04.05.2007 DE 102007021504
(43) Veröffentlichungstag der Anmeldung: 05.11.2008
(73) Patentinhaber: TESA SE, 20253 Hamburg (DE)
(72) Erfinder: Krawinkel, Thorsten, 22457, Hamburg (DE); zu Putlitz, Bodo, 22339, Hamburg (DE)

(56) Entgegenhaltungen:
- EP-A- 1 347 028
- DE-A1- 10 141 378
- JP-A- 2002 220 572
- US-A- 4 833 193

## Beschreibung

Die Erfindung betrifft die Verwendung einer Haftklebemasse auf der Basis von Vinylaromatenblockcopolymeren und einen daraus gebildeten ablösbaren Haftklebestreifen, der sowohl durch Schälen als auch durch dehnendes Verstrecken im Wesentlichen in Richtung der Verklebungsebene wieder abgelöst werden kann.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Selbstklebebänder bezeichnet.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, bekannte Selbstklebebänder und Flüssigklebstoffe. Wesentlich für den erfolgreichen Einsatz der oben genannten Klebfolienstreifen sind neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Daneben gibt es eine große Anzahl durch Schälen ablösbarer Klebestreifen auf dem Markt (siehe JP 2002220572). Im Gegensatz zu den vorgenannten strippfähigen Klebestreifen, die eine hohe Halteleistung besitzen, um auch mittelschwere Gegenstände sicher verkleben zu können, haben die durch Schälung ablösbaren Klebestreifen eine wesentlich geringere Klebkraft.
Diese darf deswegen nicht zu hoch sein, damit die Klebestreifen auch von empfindlichen Untergründen wie Tapete oder Papier wieder ablösbar sind, ohne den Untergrund zu beschädigen.

Wichtig bei allen wieder ablösbaren Klebestreifen ist neben der leichten und zerstörungsfreien Ablösbarkeit auch, dass saugfähige Untergründe wie Papier und Tapeten nicht durchfettet werden. Bei vielen Klebepads im Markt ist genau diese Durchfettung eines der Hauptprobleme, weil, um ein weiches Ablösen zu erzielen, häufig große Mengen an Weichmachern zugesetzt werden.

Da es mittlerweile eine ganze Anzahl von strippfähigen und schälbaren Klebestreifen auf dem Markt gibt und derjenige, der der Streifen verklebt, nicht identisch mit demjenigen sein muss, der den Klebestreifen wieder ablösen möchte, ist es für denjenigen, der ablöst, nicht sofort ersichtlich, ob er schälen oder in Verklebungsrichtung ziehen soll, um ein Ablösen zu ermöglichen. Bei der falschen Anwendung passiert im besten Falle nichts, der Klebestreifen löst sich nicht, häufig wird es aber zu Beschädigungen von mindestens einem der Verklebungspartner kommen, insbesondere bei Verklebungen leichter Gegenstände, die spaltfähig sind.

Obwohl in der oben zitierten Literatur eine breite Palette von Haftklebemassen für die Verwendung in strippfähigen Selbstklebebändern beschrieben werden, weisen aktuell im Markt befindliche Handelsprodukte (zum Beispiel tesa^{®} Powerstrips^{®} der tesa AG, 3M Command^{®} Adhesive Klebstreifen der Firma 3M sowie Plastofix^{®} Formuli Force 1000 Klebestreifen der Firma Plasto S.A.) hauptsächlich Haftklebemassen auf Basis von Styrolblockcopolymeren auf.
Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrol (SIS)-Blockcopolymere. Vorteile der vorgenannten styrolblockcopolymerbasierenden Haftklebemassen für den Einsatz in strippfähigen Selbstklebebändern sind zum Beispiel die mit ihnen erreichbaren sehr hohen Verklebungsfestigkeiten (bedingt unter anderem durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, die insbesondere für einen reißerfreien Ablöseprozess wesentlich ist.

Für den Einsatz der Klebmassen in abschälbaren Haftklebestreifen ist die mit obigen Produkten erzielte Klebfestigkeit aber deutlich zu hoch. Beim Abschälen eines solch klebstarken Klebestreifens kommt es bei spaltbaren Verklebungspartnern unweigerlich zu Zerstörungen der Untergründe.

Üblicherweise gibt es zwei Möglichkeiten, die Klebkraft zu reduzieren, zum einen wird der Anteil an dem Elastomer in der Klebmasse erhöht, zum anderen werden Weichmacher eingesetzt, die die Verklebungsfestigkeit erniedrigen. Da die Klebmassen mit hohen Elastomergehalten wegen ihrer erhöhten Viskosität in der Schmelze deutlich schlechter zu verarbeiten sind, als dieses bei Klebmassen mit hohen Weichmachergehalten der Fall ist, sind Klebmassen mit hohen Weichmachergehalten bevorzugt. Zudem sind Klebmassen mit hohem Elastomergehalt recht hart und besitzen einen geringen Tack, was sie unattraktiv werden lässt.
Andererseits führen hohe Gehalte an Weichmachern aber dazu, dass die Klebestreifen zur Durchfettung neigen, was nach der Anwendung und dem Ablösen der Klebestreifen insbesondere auf Tapeten zu unansehnlichen Flecken führt.

Um schließlich einen Klebestreifen möglichst universal und unauffällig verwenden zu können, ist er vorzugsweise transparent, um am Fenster genutzt werden zu können und um nicht durch zu verklebende Papiere durchzuscheinen.

Aufgabe der vorliegenden Erfindung ist die Bereitstellung einer Klebemasse zur Verwendung in einem Klebfolienstreifen, der geeignet ist, leichte Gegenstände zu verkleben, der sowohl durch Schälen als auch durch Ziehen im Wesentlichen in der Verklebungsebene wieder ablösbar ist und der zudem den Untergrund nicht durchfettet.

Gelöst wird diese Aufgabe durch die Verwendung einer Haftklebemasse, wie sie im Hauptanspruch niedergelegt ist. Gegenstand der Unteransprüche sind dabei vorteilhafte Weiterbildungen der Verwendungen der Haftklebemasse in Haftklebestreifen.

Demgemäß betrifft die Erfindung eine Haftklebemasse für ein- oder beidseitig haftklebrige Klebestreifen, die sich sowohl durch dehnendes Verstrecken im Wesentlichen in der Verklebungsebene als auch durch Schälen rückstands- und zerstörungsfrei wieder ablösen lassen, wobei die Haftklebmasse zumindest aus
- einem Vinylaromatenblockcopolymer,
- einem festen Klebharz mit einer Erweichungstemperatur nach der Ring und Kugel-Methode von über 30 °C und
- einem bei Raumtemperatur (23 °C) flüssigen Harz
besteht, wobei der Anteil an Flüssigharz mindestens 40 Gew.-% bezogen auf die gesamte Harzmenge ausmacht.

Für die Haftklebemassen finden Blockcopolymere enthaltende Polymerblöcke Anwendung, die Vinylaromaten (A-Blöcke) wie zum Beispiel Styrol enthalten und die gebildet werden durch Polymerisation von 1,3-Dienen (B-Blöcke) wie zum Beispiel Butadien und Isopren oder einem Copolymer aus beiden. Es können auch Mischungen unterschiedlicher Blockcopolymere zum Einsatz kommen. Bevorzugt werden Blockcopolymere, die zum Teil oder vollständig hydriert sind, eingesetzt.
Blockcopolymere können lineare A-B-A-Struktur aufweisen. Einsetzbar sind ebenfalls Blockcopolymere von radialer Gestalt sowie sternförmige und lineare Multiblockcopolymere.

Als weitere Komponente können A-B-Zweiblockcopolymere eingesetzt werden.

Anstelle der Polystyrolblöcke können auch Polymerblöcke auf Basis anderer aromatenhaltiger Homo- und Copolymere (bevorzugt C₈- bis C₁₂-Aromaten) mit Glasübergangstemperaturen von größer 75 °C genutzt werden wie zum Beispiel α-methylstyrolhaltige Aromatenblöcke. Gleichfalls sind Polymerblöcke auf Basis von (Meth)acrylathomo- und (Meth)acrylatcopolymeren mit Glasübergangstemperaturen von größer 75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien-Blockcopolymeren und Styrol-Isopren-Blockcopolymeren und deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte eingesetzt werden, welche weitere polydienhaltige Elastomerblöcke nutzen wie zum Beispiel Copolymere mehrerer unterschiedlicher 1,3-Diene. Erfindungsgemäß nutzbar sind des Weiteren funktionalisierte Blockcopolymere wie zum Beispiel maleinsäureanhydridmodifizierte oder silanmodifizierte Vinylaromatenblockcopolymere.

Typische Einsatzkonzentrationen für das Blockcopolymer in der Haftklebemasse liegen in einem Konzentrationsbereich zwischen 30 Gew.-% und 70 Gew.-%, bevorzugt zwischen 45 Gew.-% und 65 Gew.-%, besonders bevorzugt zwischen 30 Gew.-% und 55 Gew.-%. Die anderen Bestandteile in der Haftklebemasse setzen sich aus den Harzen sowie den gegebenenfalls vorhandenen Additiven zusammen.

Als Klebrigmacher dienen Klebharze, die mit dem Elastomerblock der Styrolblockcopolymere verträglich sind. Geeignete Klebharze sind unter anderem vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen, ein hydriertes Polymerisat reiner C₈- oder C₉-Aromaten. Vorgenannte Klebharze können sowohl allein als auch im Gemisch eingesetzt werden, vorzugsweise zumindest zum Teil hydrierte Harze.

Dabei sind die eingesetzten Harze bei Raumtemperatur fest und besitzen einen Erweichungspunkt nach der Ring und Kugel-Methode von über 30 °C.

Wenn die Haftklebemassen gemäß einer bevorzugten Ausführungsform ein wasserklar transparentes Erscheinungsbild aufweisen sollen, so sind bevorzugt Klebharze zu nutzen, die eine Eigenfarbe von 2.0, gemessen entsprechend der Gardner Farbskala, nicht überschreiten. In geringeren Mengen genutzte Klebharze können entsprechend ihrer Einsatzkonzentration auch Eigenfarben > Gardner 2.0 aufweisen.

Nach DIN ISO 4630 (1982-11) ist die Gardner-Farbzahl eine Farbzahl für die Kennzeichnung der Farbe von klaren Flüssigkeiten (zum Beispiel Bindemittel für Lacke und Beschichtungsstoffe). Sie wird ermittelt durch visuellen Vergleich der Farbe einer Probe in einem Glasrohr mit der Farbe von definierten Farbstandards. Die Farbe der Probe, die dem jeweiligen Farbstandard am nächsten kommt, wird als Gardner-Farbzahl bezeichnet.
Als Bezugsstandards der Gardner-Farbskala dienen 18 Glas-Farbstandards mit jeweils definierten Normfarbwertanteilen und Lichtdurchlässigkeiten.

Zudem besitzt die Klebmasseformulierung mindestens ein Klebharz, das bei Raumtemperatur flüssig ist. Dieses ist mit einem Anteil von mindestens 40 Gew.-%, vorzugsweise 50 Gew.-% bezogen auf den gesamten Harzanteil in der Klebmasse vorhanden.
Hierbei handelt es sich bevorzugt ebenfalls um hydrierte Klebharze, aber auch nicht hydrierte Harze sind einsetzbar.
Prinzipiell sind die gleichen Harze einsetzbar, wie sie oben beschrieben worden sind, sie müssen nur bei Raumtemperatur flüssig sein.

Als weitere Additive können typischerweise genutzt werden:
- primäre Antioxidanzien wie zum Beispiel sterisch gehinderte Phenole
- sekundäre Antioxidanzien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockverstärkerharze
- Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine, um nur einige wenige zu nennen.

Plastifizierungsmittel, die keine Flüssigharze sind wie zum Beispiel Weichmacheröle oder niedermolekulare flüssige Polymere wie zum Beispiel niedermolekulare Polybutene mit Molmassen < 1500 g/mol (Zahlenmittel), werden lediglich in sehr geringen Mengen eingesetzt, bevorzugt wird auf ihre Verwendung vollständig verzichtet. Bevorzugt sind somit plastifizierungsmittelfreie Haftklebemassen.

Die Haftklebemassen können sowohl für einschichtige als auch für mehrschichtige sich sowohl durch dehnendes Verstrecken im Wesentlichen in der Verklebungsebene als auch durch Schälen rückstands- und zerstörungsfrei wieder ablösbare Haftklebestreifen verwendet werden.
Auch Aufbauten mit einem weiteren dehnbaren Träger in der Mitte der Klebestreifen sind denkbar, wobei die Dehnbarkeit des Trägers ausreichend sein muss, um ein Ablösen des Klebstreifens durch dehnendes Verstrecken zu gewährleisten. Als Träger können zum Beispiel sehr dehnfähige Folien oder Schaumstoffe dienen.
Im Falle der Verwendung in mehrschichtigen Haftklebestreifen können die Haftklebemassen sowohl die mittlere, innere Schicht als auch die äußeren Schichten der Klebestreifen bilden.
Werden die Klebmassen als äußere Schichten eingesetzt, können innen liegende Schichten wahlweise aus Klebemassen basierend auf im Elastomerblock gesättigten Styrolblockcopolymeren als auch auf Basis von im Elastomerblock ungesättigten Styrolblockcopolymeren aufgebaut sein. Im letzteren Fall enthalten die außen liegenden Haftklebstoffschichten typischerweise UV-Schutzmittel, zum Beispiel UV-Absorber, welche die UV-Belastung der innen liegenden Schichten reduzieren.

Einseitig haftklebrige Haftklebestreifen können hierbei zum Beispiel durch einseitige Inertisierung des Haftklebestreifens erhalten sein.

Typische Konfektionierformen von die die Haftklebemassen nutzenden Haftklebestreifen sind Klebebandrollen sowie Streifen, wie sie zum Beispiel in Form von Stanzlingen erhalten werden. Optional enthalten die Stanzlinge einen nicht haftklebrigen Anfasserbereich, von welchem aus der Ablöseprozess ausgeführt werden kann.

Die Stanzlinge weisen vorteilhafterweise eine Fläche von 0,5 bis 20 cm² auf, vorzugsweise von 0,7 bis 5 cm².

Die Dicke der Stanzlinge ist abhängig von ihrem Aufbau.
Sofern der Stanzling aus einer Schicht besteht, sprich lediglich aus der Haftklebemasse, sind Dicken des Stanzlings zwischen 200 bis 1500 µm, vorzugsweise 300 bis 1000 µm vorteilhaft.
Besteht der Stanzling aus einem dehnbaren Zwischenträger, beispielsweise einem Schaum oder einer Folie, auf den beidseitig jeweils eine Schicht der Haftklebemasse aufgebracht sind, weisen gemäß einer bevorzugten Ausführungsform die Haftklebemassenschichten Dicken von 20 bis 300 µm, vorzugsweise 50 bis 200 µm auf. Die Dicken der eingesetzten Schaumstoffe liegen insbesondere zwischen 150 µm und 600 µm, bevorzugt zwischen 250 µm und 550 µm, können aber auch bis zu 1000 µm betragen. Falls Folien eingesetzt sind, liegen deren Dicken vorzugsweise zwischen 20 bis 180 µm, weiter bevorzugt 50 bis 150 µm.
Alle genannten Dicken sind beispielhaft zu verstehen und sollen die Erfindung in keiner Weise beschränken.

Damit die erfindungsgemäßen strippfähigen Klebfolienstreifen leicht und rückstandsfrei wieder abgelöst werden können, müssen sie bestimmte klebtechnische Eigenschaften besitzen.
Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt.

Zudem müssen strippfähige Klebebänder, um leicht und rückstandsfrei wieder abgelöst werden zu können, neben den oben beschriebenen klebtechnischen auch einige bestimmte mechanische Eigenschaften besitzen.
Das Verhältnis der Reißkraft und der Strippkraft muss größer als zwei, bevorzugt größer als drei sein.
Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die für das Ablösen des Klebebandes von den Verklebungsuntergründen nötig ist, und der Kraft, die zur Verformung des Klebebandes aufgewendet werden muss, zusammen. Die zur Verformung des Klebebandes erforderliche Kraft ist abhängig von der Dicke.
Die zum Ablösen benötigte Kraft ist dagegen in dem betrachteten Bereich unabhängig von der Dicke der Klebestreifen.

Die Reißfähigkeit steigt hingegen proportional mit der Dicke der Klebestreifen an. Hieraus folgt, dass für Selbstklebebänder mit einem Einschichtaufbau, wie sie in der DE 33 31 016 C2 offenbart sind, die Reißfestigkeit unterhalb einer bestimmten Dicke kleiner als die Abzugskraft wird. Oberhalb einer bestimmten Dicke wird das Verhältnis von Abzugskraft zur Stripkraft hingegen größer als zwei. Wenn die Reißkraft der eingesetzten Polymere aber sehr niedrig ist, folgt daraus, dass die Dicke sehr groß werden muss, wodurch auch die Strippkräfte ansteigen.

Überraschenderweise weisen die beschriebenen Klebestreifen trotz des hohen Gehaltes an flüssigem Klebharz eine genügend hohe Reißkraft auf, um ein Ablösen durch Ziehen in der Verklebungsebene bei flexiblen leichten Gegenständen ohne Reißer zu gewährleisten, insbesondere wenn bei einem einschichtigen Aufbau die Dicke über 200 µm liegt.

Überraschenderweise hat sich gezeigt, dass mit dem Einsatz von Flüssigharzen als Weichmacher im Gegensatz zum Einsatz von Weichmacherölen, die üblicherweise bevorzugt werden, keine Durchfettung stattfindet, wenn man als Elastomere Styrolblockcopolymere einsetzt.

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Anhand der nachfolgend beschriebenen Figuren sowie Beispielen werden besonders vorteilhafte Ausführungen der Erfindung näher erläutert, ohne damit die Erfindung unnötig einschränken zu wollen.

Es zeigen
- Figur 1: den erfindungsgemäßen haftklebrigen Klebestreifen, bei dem die Kernschicht aus einer Klebemasse besteht, und
- Figur 2: den erfindungsgemäßen haftklebrigen Klebestreifen, bei dem die Kernschicht aus einem Träger besteht.

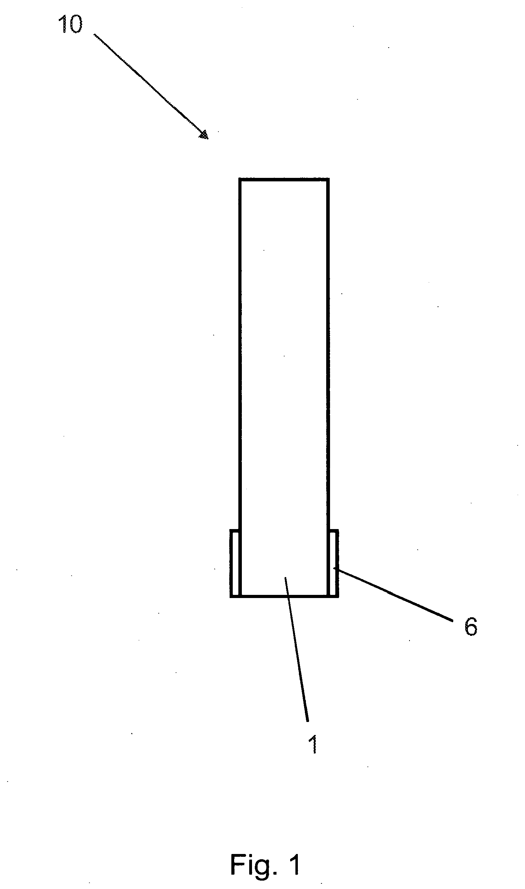

In der Figur 1 ist der erfindungsgemäße haftklebrige Klebestreifen 10 gezeigt, bei dem die Kernschicht 1 aus der Klebemasse besteht, welche sich durch dehnendes Verstrecken insbesondere in der Verklebungsebene wiederablösen lässt.
Die Kernschicht 1 weist einem Bereich auf, der als Anfasser dient, an dem gezogen wird, um das dehnende Verstrecken insbesondere in der Verklebungsebene der Kernschicht 1 zu erzielen. Dieser Bereich ist auf beiden Seiten durch das Aufbringen von bevorzugt silikonisierten Folien- oder Papierstücken 6 nicht haftklebrig ausgerüstet.
Bevorzugt weist der Klebestreifen 10 keinen durch eine Eindeckung gebildeten Anfasser auf.

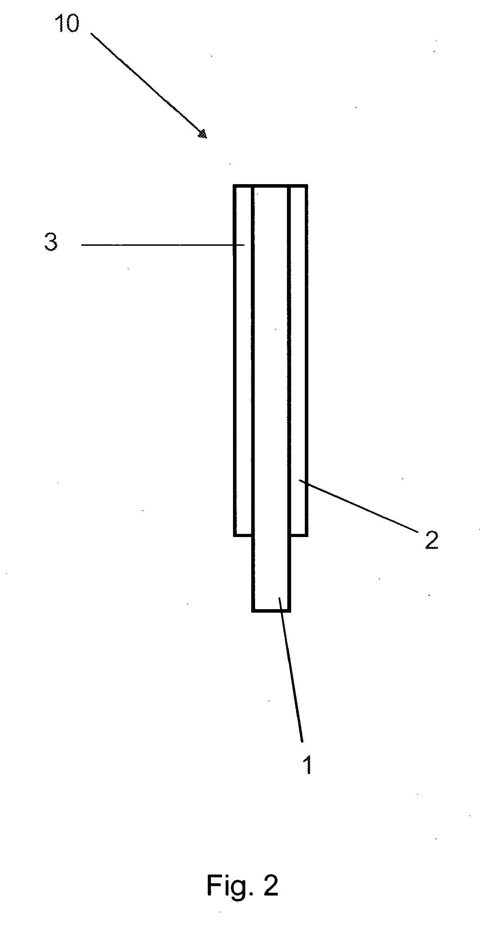

In der Figur 2 ist der erfindungsgemäße haftklebrige Klebestreifen 10 gezeigt, bei dem die Kernschicht 1 aus einem Träger besteht, welcher sich durch dehnendes Verstrecken insbesondere in der Verklebungsebene wiederablösen lässt.
Auf den Träger 1 sind zwei Klebeschichten 2, 3 aufgebracht, die vorzugsweise die gleiche Zusammensetzung aufweisen.

### Prüfmethoden

Die Messungen der Zugfestigkeit beziehungsweise der maximalen Dehnung erfolgen, wenn nicht anders vermerkt, in Anlehnung an DIN 53504 mit Verwendung von Schulterstäben der Größe S3 sowie bei einer Separationsgeschwindigkeit von 300 mm/min.

Zur Ermittlung der Ablösekraft (Strippkraft) wird eine Klebstofffolie der Abmessungen 50 mm x 20 mm (Länge x Breite), die am oberen Ende einen nicht haftklebrigen Anfasserbereich aufweist, zwischen zwei Lagen aus 80 g-Papier (deckungsgleich zueinander angeordnet) der Abmessungen 50 mm x 30 mm mit einem Anpressdruck von 100 N derart verklebt, dass der Anfasserbereich aus der Klebfuge hervorragt. Die Verklebungen werden 24h bei +40 °C gelagert. Nach Rekonditionierung auf Raumtemperatur werden die Papierenden ohne Klebmasse zur Messung in der unteren Klemmbacke einer Zugprüfmaschine fixiert. Zur Messung wird der Klebfolienstreifen mit einer Zuggeschwindigkeit von 1000 mm/min parallel zur Verklebungsebene herausgelöst. Dabei wird die erforderliche Ablösekraft in N gemessen. Angegeben wird der Mittelwert der Strippspannungswerte (in N/cm), gemessen in dem Bereich, in welchem der Klebestreifen auf einer Verklebungslänge zwischen 10 mm und 40 mm von den Papieren abgelöst ist.

Zur Messung der Halteleistung werden 1 cm² große Klebmassestückchen auf einer Raufasertapete der Körnung Erfurt 52 verklebt. Auf die andere Seite werden drei zusammengeklammerte DIN A4 Papiere mit einem Flächengewicht von 80 g/m² geklebt. Es wird die Zeit in Tagen gemessen, wann die Papiere von der Raufasertapete abfallen.

Zur Durchfettungsmessung werden jeweils drei Klebestreifen der Größe von 1 cm² auf ein Durchschlagspapier geklebt und für 3 Monate bei 40 °C im Umlufttrockenschrank gelagert. Anschließend werden die Klebestreifen entfernt und das Papier auf Spuren von Durchfettung untersucht.

Drei Klebestreifen von 1 cm² Größe werden wie unter Halteleistung beschrieben zwischen Raufasertapete und Papier verklebt und 1 Monat bei Raumtemperatur gelagert. Anschließend wird das Papier mit moderater Geschwindigkeit abgeschält, und sowohl die Tapete als auch das Papier auf Beschädigungen untersucht.
Daneben werden drei genauso vorbereitete Muster wieder gelöst, indem vorsichtig an einer Ecke des Klebestreifens parallel zur Verklebungsebene gezogen wird, und damit der gesamte Klebestreifen aus der Klebfuge entfernt wird. Es wird untersucht, ob die beiden Verklebungspartner beschädigt sind und ob es zum Reißen der Klebmasse kommt.

Die Ring- und Ball-Methode ist die übliche Methode zur Feststellung der Erweichungspunkte. Einzelheiten können der ASTM E 28 und der DIN EN 1238 entnommen werden, auf die hiermit ausdrücklich Bezug genommen wird.

### Herstellung der Haftklebestreifen

Die Haftklebemassen wurden in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von ca. +140 bis +160 °C und unter Inertisierung mit CO₂ als Schutzgas zu einer homogenen Mischung verarbeitet. Nach dem Erkalten wurden durch ca. 5-minütiges Verpressen der Klebmasse bei +100 °C bis +120 °C in einer temperierbaren Presse (Typ KHL 50 der Firma Bucher-Guyer) einschichtige Klebstoff-Folienstücke hergestellt. Die Dicke der Folien betrug 700 µm ± 50 µm.

### Beispiele

Im Folgenden wird die Erfindung durch einige Beispiele näher erläutert, ohne die Erfindung damit einschränken zu wollen.

Allen Beispielen wurden als Alterungsschutzmittel 0,5 Teile Irganox 1010, ein sterisch gehindertes Phenol (CAS 6683-19-8), und 0,5 Teile Tinuvin P (2-(2'-Hydroxy-5'-Methylphenyl)benzotriazol) als UV-Absorber zugesetzt.

### Beispiel 1

| | | |
|---|---|---|
| 80 Teile | Septon 2063 | SEPS mit 13 % Blockpolystyrolgehalt und ca. 60% Zweiblockgehalt der Firma Kuraray |
| 20 Teile | Septon 2007 | SEPS mit 30 % Blockpolystyrolgehalt und ohne Zweiblock der Firma Kuraray |
| 60 Teile | Escorez 5600 | Hydriertes KW-Harz mit einem Erweichungspunkt von 100°C der Firma Exxon |
| 70 Teile | Escorez 5040 | Hydriertes flüssiges KW-Harz der Firma Exxon |

### Beispiel 2

| | | |
|---|---|---|
| 70 Teile | Kraton G 1657 | SEBS mit 13 % Blockpolystyrolgehalt und ca. 36% Zweiblockgehalt der Firma Kraton |
| 30 Teile | Kraton G 1650 | SEBS mit 30 % Blockpolystyrolgehalt und ohne Zweiblock der Firma Kraton |
| 65 Teile | Regalite S 1100 | Teilhydriertes KW-Harz mit einem Erweichungspunkt von 100 °C der Firma Eastman |
| 85 Teile | Regalite R 1010 | Hydriertes flüssiges KW-Harz der Firma Eastman |

### Vergleichsbeispiel C3

| | | |
|---|---|---|
| 70 Teile | Kraton G 1657 | SEBS mit 13 % Blockpolystyrolgehalt und ca. 36% Zweiblockgehalt der Firma Kraton |
| 30 Teile | Kraton G 1650 | SEBS mit 30 % Blockpolystyrolgehalt und ohne Zweiblock der Firma Kraton |
| 120 Teile | Regalite S 1100 | Teilhydriertes KW-Harz mit einem Erweichungspunkt von 100 °C der Firma Eastman |
| 20 Teile | Regalite R 1010 | Hydriertes flüssiges KW-Harz der Firma Eastman |

### Vergleichsbeispiel C4

| | | |
|---|---|---|
| 70 Teile | Kraton G 1657 | SEBS mit 13 % Blockpolystyrolgehalt und ca. 36% Zweiblockgehalt der Firma Kraton |
| 30 Teile | Kraton G 1650 | SEBS mit 30 % Blockpolystyrolgehalt und ohne Zweiblock der Firma Kraton |
| 65 Teile | Regalite S 1100 | Teilhydriertes KW-Harz mit einem Erweichungspunkt von 100 °C der Firma Eastman |
| 85 Teile | Ondina G41 | Aliphatenreiches medizinisches Weißöl der Firma Shell |

Mit den oben beschriebenen Klebmassen wurden einschichtige 700 µm dicke Klebestreifen hergestellt mit folgenden Eigenschaften:

| Haftklebemasse Beispiel Nr. | Zugfestigkeit in N/cm | Strippkraft in N/cm | Halteleistung in Tagen | Durchfettung | Wiederablösbarkeit durch Schälen | Wiederablösbarkeit durch Ziehen |
|---|---|---|---|---|---|---|
| 1 | 42,3 | 9,2 | >20 | keine | beschädigungslos | reißerfrei und beschädigungslos |
| 2 | 45,7 | 10,4 | >20 | keine | beschädigungslos | reißerfrei und beschädigungslos |
| C3 | 49,4 | 12,3 | >20 | keine | Ausreißer sowohl an Tapete als Papier | reißerfrei und beschädigungslos |
| C4 | 43,8 | 9,8 | 12 | Sehr stark | beschädigungslos | beschädigungslos, 1 x gerissen |

## Patentansprüche

1. Verwendung einer Haftklebemasse in einem ein- oder beidseitig klebenden Haftklebestreifen, der sich sowohl durch dehnendes Verstrecken im Wesentlichen in der Verklebungsebene als auch durch Schälen rückstands- und zerstörungsfrei wieder ablösen lässt, wobei die Haftklebmasse zumindest aus einem Vinylaromatenblockcopolymer,
einem festen Klebharz mit einer Erweichungstemperatur nach der Ring und KugelMethode von über 30 °C und
einem bei Raumtemperatur (23 °C) flüssigen Harz
besteht, wobei der Anteil an Flüssigharz mindestens 40 Gew.-% bezogen auf die gesamte Harzmenge ausmacht.

2. Verwendung einer Haftklebemasse nach Anspruch 1,
**dadurch gekennzeichnet, dass**
es sich bei dem Vinylaromatenblockcopolymer um ein Styrolblockropolymer handelt.

3. Verwendung einer Haftklebemasse nach Anspruch 1 oder 2,
**dadurch gekennzeichnet, dass**
das Vinylaromatenblockcopolymer gebildet wird durch die Polymerisation von Styrol als A-Block und als B-Blöcke von Butadien und/oder Isopren beziehungsweise deren Hydrierungsprodukten oder von Isobutylen.

4. Verwendung einer Haftklebemasse nach zumindest einem der vorherigen Ansprüche 1 bis 3,
**dadurch gekennzeichnet, dass**
das Blockcopolymer zumindest zum Teil hydriert ist.

5. Verwendung einer Haftklebemasse nach zumindest einem der vorherigen Ansprüche,
**dadurch gekennzeichnet, dass**
als bei Raumtemperatur feste und einen Erweichungspunkt nach der Ring und KugelMethode von über 30 °C besitzende Harze nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen, ein hydriertes Polymerisat reiner C₈- oder C₉-Aromaten verwendet werden, vorzugsweise zumindest zum Teil hydrierte Harze.

6. Verwendung einer Haftklebemasse nach zumindest einem der vorherigen Ansprüche,
**dadurch gekennzeichnet, dass**
die Haftklebemasse transparent ist.

7. Verwendung einer Haftklebemasse nach Anspruch 6,
**dadurch gekennzeichnet, dass**
der Haftklebestreifen einen dehnbaren Zwischenträger aufweist, auf den zumindest einseitig die Klebemassenschicht aufgebracht ist.

8. Verwendung einer Haftklebemasse nach Anspruch 6 oder 7,
**dadurch gekennzeichnet, dass**
die Reißkraft der Klebmasse mindestens 3 mal so groß ist wie die Ablösekraft, die beim Ziehen am Haftklebestreifen in Richtung der Verklebungsebene benötigt wird.

## Claims

1. Use of a pressure-sensitive adhesive in a single-or double-sidedly adhering pressure-sensitive adhesive strip redetachable without residue or destruction both by extensive stretching substantially in the bond plane and by peeling, the pressure-sensitive adhesive being composed at least of
a vinylaromatic block copolymer,
a solid tackifying resin having a softening temperature by the ring-and-ball method of more than 30°C and
a resin which is liquid at room temperature (23°C),
the fraction of liquid resin accounting for at least 40% by weight, based on the total amount of resin.

2. Use of a pressure-sensitive adhesive according to Claim 1, **characterized in that** the vinylaromatic block copolymer is a styrene block copolymer.

3. Use of a pressure-sensitive adhesive according to Claim 1 or 2, **characterized in that** the vinylaromatic block copolymer is formed by the polymerization of styrene as A block and, as B blocks, of butadiene and/or isoprene and/or their hydrogenation products or of isobutylene.

4. Use of a pressure-sensitive adhesive according to at least one of preceding Claims 1 to 3, **characterized in that** the block copolymer is at least partly hydrogenated.

5. Use of a pressure-sensitive adhesive according to at least one of the preceding claims, **characterized in that** resins used which are solid at room temperature and possess a softening point by the ring-and-ball method of more than 30°C are non-hydrogenated, partially hydrogenated or fully hydrogenated resins based on rosin or on rosin derivatives, hydrogenated polymers of dicyclopentadiene, non-hydrogenated, partially hydrogenated, selectively hydrogenated or fully hydrogenated hydrocarbon resins based on C₅, C₅/C₉ or C₉ monomer streams, polyterpene resins based on α-pinene and/or β-pinene and/or δ-limonene, and/or a hydrogenated polymer of pure C₈- or C₉ aromatics, preferably at least partly hydrogenated resins.

6. Use of a pressure-sensitive adhesive according to at least one of the preceding claims, **characterized in that** the pressure-sensitive adhesive is transparent.

7. Use of a pressure-sensitive adhesive according to Claim 6, **characterized in that** the pressure-sensitive adhesive strip has an extensible carrier on at least one side of which the layer of adhesive is applied.

8. Use of a pressure-sensitive adhesive according to Claim 6 or 7, **characterized in that** the tensile strength of the adhesive is at least three times as great as the detachment force required when pulling on the pressure-sensitive adhesive strip in the direction of the bond plane.

## Revendications

1. Utilisation d'une masse autoadhésive dans une bande autoadhésive adhésive sur une ou les deux faces, qui peut être à nouveau enlevée par un étirement avec allongement essentiellement dans le plan de collage ainsi que par pelage, sans résidus et sans être dégradée, la masse adhésive étant constituée au moins par
- un copolymère à blocs d'aromatiques de vinyle,
- une résine adhésive solide présentant une température de ramollissement selon le procédé anneau et bille supérieure à 30°C et
- une résine liquide à température ambiante (23°C) la proportion de résine liquide étant d'au moins 40% en poids par rapport à la quantité totale de résine.

2. Utilisation d'une masse autoadhésive selon la revendication 1, **caractérisée en ce qu'**il s'agit, pour le copolymère à blocs d'aromatiques de vinyle, d'un copolymère à blocs de styrène.

3. Utilisation d'une masse autoadhésive selon la revendication 1 ou 2, **caractérisée en ce que** le copolymère à blocs d'aromatiques de vinyle est formé par la polymérisation de styrène comme bloc A et, comme blocs B, de butadiène et/ou d'isoprène ou, selon le cas, de leurs produits d'hydrogénation ou d'isobutylène.

4. Utilisation d'une masse autoadhésive selon au moins l'une quelconque des revendications précédentes 1 à 3, **caractérisée en ce que** le copolymère à blocs est au moins partiellement hydrogéné.

5. Utilisation d'une masse autoadhésive selon au moins l'une quelconque des revendications précédentes, **caractérisée en ce qu'**on utilise comme résine solide à température ambiante et présentant un point de ramollissement selon le procédé anneau et bille supérieur à 30°C des résines non hydrogénées, partiellement ou totalement hydrogénées à base de colophonium ou de dérivés de colophonium, des polymères hydrogénés du dicyclopentadiène, des résines hydrocarbonées non hydrogénées, partiellement, sélectivement ou totalement hydrogénées à base de flux de monomères en C₅, C₅/C₉ ou C₉, des résines polyterpéniques à base d'α-pinène et/ou de β-pinène et/ou de 8-limonène, un polymère hydrogéné d'aromatiques en C₈ ou C₉ purs, de préférence des résines au moins partiellement hydrogénées.

6. Utilisation d'une masse autoadhésive selon au moins l'une quelconque des revendications précédentes, **caractérisée en ce que** la masse autoadhésive est transparente.

7. Utilisation d'une masse autoadhésive selon la revendication 6, **caractérisée en ce que** la bande autoadhésive présente un support intermédiaire pouvant être allongé, sur lequel est appliquée, au moins sur une face, la couche de masse adhésive.

8. Utilisation d'une masse autoadhésive selon la revendication 6 ou 7, **caractérisée en ce que** la force de déchirure de la masse adhésive est au moins 3 fois plus grande que la force de détachement, qui est nécessaire lors de la traction sur la bande autoadhésive dans le sens du plan de collage.
